# EUROPEAN PATENT APPLICATION

(11) **EP 2 769 890 A1**
(43) Date of publication of application: **27.08.2014**
(21) Application number: 14020005.6
(22) Date of filing: 17.01.2014
(51) Int. Cl.: B60T 1/06, B60T 11/04, F16H 63/34

(54) **Parking brake device**

(30) Priority: 25.02.2013 JP 2013035144
(71) Applicant: SUMITOMO HEAVY INDUSTRIES, LTD., Tokyo 141-6025 (JP)
(72) Inventor: Isizuka, Masayuki, Yokosuka-shi, Kanagawa, 237-8555 (JP); Nagumo, Toshiya, Yokosuka-shi, Kanagawa, 237-8555 (JP)
(74) Representative: Emde, Eric

(57) **Abstract**

A first component (28), which is connected to a transmitting component (22) that transmits a brake operation by a driver, is arranged to travel, in response to the brake operation, in a direction in which the transmitting component (22) travels. A second component (32) has a pressure portion (32B) to press a brake piston (40), which actuates friction components of a brake mechanism (14), in a direction different from the direction in which the transmitting component (22) travels. The first component (28) has an inclined surface (28E). The second component (32) has a contact portion (32C), which comes into contact with the inclined surface (28E), and is arranged such that the pressure portion (32B) turns about a fulcrum (32A) upon the traveling of the first component (28).

## Description

The present invention relates to a parking brake device.

Some power transmission apparatuses for use in a vehicle include a parking brake device that causes an external force to press against a plurality of friction plates, which forms a brake or a clutch, to obtain a braking force which is to be used during the parking of the vehicle.

A parking brake device, disclosed in Japanese Patent Application Laid-Open No. 2003-226231, is provided with a front-drive hydraulic clutch that can transmit the power from a rear wheel transmission system to front wheels when the clutch is engaged, although the clutch can be disengaged. This parking brake device is arranged to cause a locking mechanism to thrust a fitting pin into a fitting groove, which is formed in the outer periphery of a clutch housing that stores the clutch, so as to lock an output shaft and thereby obtain a braking force.

The locking mechanism employs a substantially L-shaped arm. This arm is pivotally supported at its middle portion by a pivot shaft. The arm is arranged to come into contact at its one end with a protruding end surface of the fitting pin and is connected at its other end to a connecting wire linked to a parking brake lever.

When the parking brake lever is turned ON by a driver, the arm is turned upward by the connecting wire to slide the fitting pin upward. The fitting pin at the upper portion engages in the fitting groove in the clutch housing to lock the output drive shaft. When the parking brake lever is turned OFF, the arm is turned downward by the connecting wire to allow a spring to slide the fitting pin downward to be released from the fitting groove in the clutch housing.

The parking brake device, disclosed in the Japanese Patent Application Laid-Open described above, causes the L-shaped arm, which is pivotally supported, to turn so as to fit the fitting pin in the fitting groove in the clutch housing and to release the pin from the groove. Thus, the direction in which the connecting wire, connected to the other end of the arm, extends (i.e., the inclination of the connecting wire) varies with the parking brake lever ON and OFF, deforming the connecting wire. Consequently, the connecting wire may interfere with another component of the vehicle every time the parking brake is actuated or may suffer fatigue from repeated bending.

Some embodiments according to this invention have been achieved in light of this situation and it is an object of the present invention to provide an arrangement of a parking brake device for preventing a component that transmits a brake operation from interfering with another component and from suffering fatigue due to the repeated bending.

One embodiment of the present invention is a parking brake device. This device includes: a first component connected to a transmitting component that transmits a brake operation by a driver, the first component being configured to travel, in response to the brake operation, in a direction in which the transmitting component travels; and a second component having a pressure portion that presses a brake piston in a direction different from the direction in which the transmitting component travels, the brake piston being configured to actuate friction components of a brake mechanism. The first component has an inclined surface, and the second component has a contact portion that comes into contact with the inclined surface and is configured to allow the pressure portion to turn about a fulcrum upon the traveling of the first component.

According to this embodiment, the first component, which is connected to the transmitting component, travels in a direction similar to the direction in which the transmitting component travels upon the actuation of the parking brake. As a result, the direction in which the transmitting component extends hardly varies with the parking brake actuated and not actuated. This can prevent the transmitting component from interfering with another component every time the parking brake is actuated and from suffering fatigue due to repeated bending.

Optional combinations of the aforementioned constituting elements, and implementations of the invention in the form of methods, apparatuses, and systems may also be practiced as additional modes of the present invention.

Embodiments will now be described, by way of example only, with reference to the accompanying drawings which are meant to be exemplary, not limiting, and wherein like elements are numbered alike in several Figures, in which:

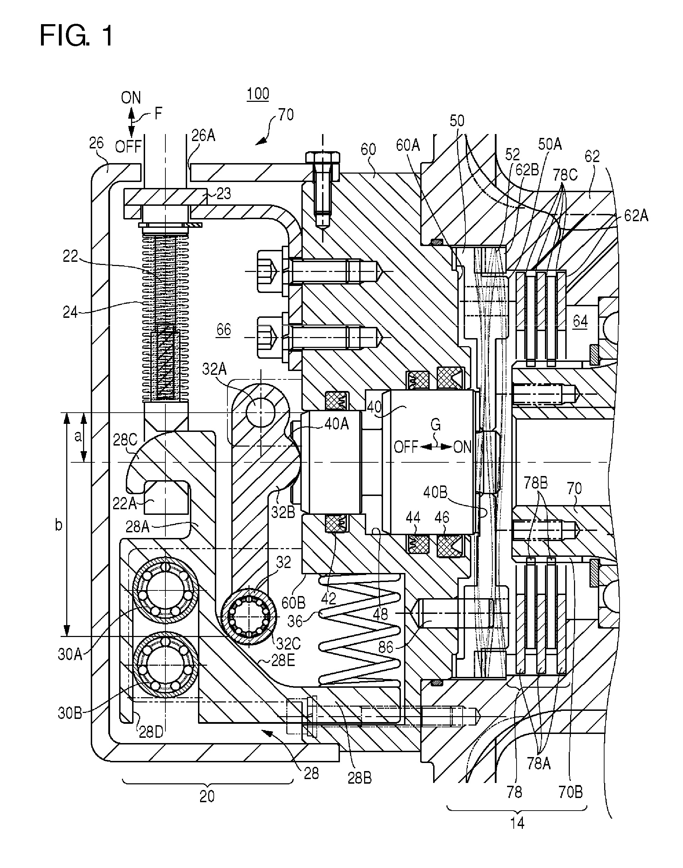

Fig. 1 is a partial sectional view of the arrangement of a power transmission apparatus including a parking brake device according to an embodiment of the present invention.

The invention will now be described by reference to the preferred embodiments. This does not intend to limit the scope of the present invention, but to exemplify the invention.

Fig. 1 is a sectional view of a brake mechanism 14 and a parking brake device 20 that are included in a power transmission apparatus 100 to be integrated with wheels of a vehicle, taken along a vertical plane including a central axis of the power transmission apparatus.

The power transmission apparatus 100 includes a speed reducer and a motor, which are not shown, the wet multiple-plate brake mechanism 14, and the parking brake device 20 and is used to drive the wheels of the vehicle. The brake mechanism 14 is arranged to slow down and/or stop the rotation of an output shaft 70 of the motor. The output shaft 70 of the motor is connected to an input shaft of the speed reducer. The speed reducer and the motor have known arrangements, and thus the description thereof will be omitted herein.

The brake mechanism 14 includes a multiple-plate brake unit 78 including a plurality of friction plates. The friction plates of the multiple-plate brake unit 78 are constituted by a plurality of (three in the example illustrated in the figure) fixed friction plates 78A and a plurality of (two in the example illustrated in the figure) rotary friction plates 78B. The friction plates 78A and 78B are positioned coaxially with the output shaft 70 of the motor.

The fixed friction plates 78A are located between a second brake piston 50, positioned so as to cover the rear end of the motor casing 62 of the motor, and a first shoulder portion 62A, formed on an inner periphery of the motor casing 62. The fixed friction plates 78A are secured by a through pin, not shown, in a circumferential direction and arranged so as to be able to travel in an axial direction along the through pin.

The rotary friction plates 78B are mounted on the output shaft 70, which rotates together with an undepicted rotor of the motor and, thus, can rotate together with the output shaft 70. The output shaft 70 has a spline 70B formed on an outer periphery of the shaft along the axial direction, and the rotary friction plates 78B are engaged at their inner circumference ends with the spline 70B. Consequently, the rotary friction plates 78B are combined with the output shaft 70 through the spline 70B in the circumferential direction, with the capability of traveling along the output shaft 70 in the axial direction. The rotary friction plates 78B have friction sheets 78C attached on their surfaces.

A first brake piston 40 is arranged so as to slide in a cylinder 48 formed in a cylinder block 60 attached to the rear end of the motor casing 62. The cylinder 48 is in communication with a hydraulic mechanism through an oil passage, which is not shown, such that the hydraulic mechanism supplies pressure oil through the oil passage into the cylinder 48 in response to a braking operation. Three seals 42, 44, and 46 located between the first brake piston 40 and the cylinder 48 provide a seal for an inner space 64 of the motor and the parking brake device 20.

The second brake piston 50 is positioned between a right end surface 60A of the cylinder block 60 and the multiple-plate brake unit 78 so as to travel in contact with a right end surface 40B of the first brake piston 40 in conjunction with the travel of the first brake piston. The second brake piston 50 has a contact surface 50A, which is formed at a right end of the second brake piston so as to come into contact with the leftmost one of the fixed friction plates 78A in response to the braking operation.

A return spring 52 is interposed between the second brake piston 50 and a second shoulder portion 62B, which is formed on the inner periphery of the motor casing 62, to urge the second brake piston 50 toward the left.

The brake mechanism 14 is of a wet type brake. The inner space 64 inside the speed reducer, the motor, and the brake mechanism 14 is a sealed and continuous space, in which a lubricant is filled and can flow.

The braking action of the power transmission apparatus 100 by the brake mechanism 14 will now be described.

Upon a predetermined braking operation by the driver, the hydraulic mechanism supplies the pressure oil through the oil passage into the cylinder 48, which causes the first brake piston 40 to travel opposite to the direction of a vehicle body (to the right in the figure, i.e., in the "ON" direction of an arrow G) in the cylinder 48. The second brake piston 50 travels to the right accordingly, with the contact surface 50A pressing against the leftmost fixed friction plate 78A in the axial direction. This brings the fixed friction plates 78A and the rotary friction plates 78B into forceful contact with each other successively. As described above, the fixed friction plates 78A are secured by the through pin in the circumferential direction, and the rotary friction plates 78B are combined with the output shaft 70 through the spline 70B, which is formed in the output shaft 70, in the circumferential direction. Consequently, the hard contact of the fixed friction plates 78A and the rotary friction plates 78B through the friction sheets 78C attached on the rotary friction plates 78B brings about the braking action on the output shaft 70.

Upon stopping of the braking operation by the driver, the supply of the pressure oil in the cylinder 48 stops, and thus the restoring force of the return spring 52, interposed between the second brake piston 50 and the second shoulder portion 62B, causes the second brake piston 50 and the first brake piston 40 to travel back in the vehicle body direction (to the left in the figure, i.e., in the "OFF" direction of the arrow G), allowing each of the fixed friction plates 78A to return to its original position in the axial direction. This allows the rotary friction plates 78B to return to their original positions in the axial direction, undoing the contact between the fixed friction plates 78A and the rotary friction plates 78B and thereby losing the braking action.

The parking brake device 20 is mounted on the rear end of the cylinder block 60. The parking brake device 20 is arranged to use the multiple-plate brake unit 78 of the brake mechanism 14 to exert a braking force which is to be used during the parking of the vehicle.

A first component 28 has a substantially L-shaped section with two arms 28A and 28B extending orthogonally to each other in the sectional view. The first component 28 transmits a pulling force of a brake wire 22 to a second component 32 to be described hereinafter.

The first component 28 has a hook-shaped portion 28C, which is formed at an end of the arm 28A, to connect to the brake wire 22. The brake wire 22 is for transmitting the pulling force caused by the operation of a parking brake lever, not shown, to the first component 28 and has flexibility to a certain degree. A metal bar or a metal segment, which hardly deform, may be used in the form of the transmitting component in place of the brake wire.

The brake wire 22 enters in a covering 26 through a penetrating hole 26A, which is formed in the covering, and is guided in the axial direction of the wire by a passage component 23 secured to the cylinder block 60. A hook 22A is attached to the brake wire 22 at its end and catches on the hook-shaped portion 28C of the first component 28 to connect the brake wire 22 and the first component 28. The brake wire 22 is enclosed by a coil spring 24 that provides tension to the brake wire 22.

The first component 28 has a guide groove 28D formed in a direction similar to the direction in which the brake wire 22 extends. Rollers 30A and 30B are positioned in the guide groove 28D and are rotatably supported by a support, not shown, to the cylinder block 60. The rollers 30A and 30B are each preferably constituted by a bearing in order to rotate with low friction. The rollers 30A and 30B each have a diameter substantially similar to that of the guide groove 28D. The guide groove 28D and the rollers 30A and 30B guide the first component 28 in a direction in which the guide groove 28D extends, in other words, in a direction in which the brake wire 22 extends.

The first component 28 has a smooth inclined surface 28E on its side facing the second component 32.

The second component 32 changes the direction of the pulling force, which has been transmitted to the first component 28, and transmits the pulling force to the first brake piston 40. The second component 32 has a pressure portion 32B to press against a rear end portion 40A of the first brake piston 40. The second component 32 is at one end thereof supported by a fulcrum 32A so as to be able to turn and has at the other end thereof a contact portion 32C to come into contact with the inclined surface 28E formed on the first component 28. Although the contact portion 32C is preferably constituted by a roller that rolls on the inclined surface 28E, the contact portion 32C may be formed with a sliding component having a smooth surface.

The pressure portion 32B of the second component 32 preferably has a convex surface to be received in a concave surface formed in the rear end portion 40A of the first brake piston 40. This can alleviate the contact pressure, which is caused by the pressing of the brake piston, between the pressure portion 32B and the rear end portion 40A. Note that the pressure portion 32B may have a concave surface and the rear end portion 40A may have a convex surface.

In the second component 32, the fulcrum 32A, the pressure portion 32B, and the contact portion 32C are positioned in the sequence set forth in a substantially vertical direction in the figure. In other words, the pressure portion 32B is positioned between the fulcrum 32A and the contact portion 32C.

Additionally, in the second component 32, a distance a from the fulcrum 32A to the center of the pressure portion 32B is shorter than a distance b from the fulcrum 32A to the point at which the contact portion 32C is in contact with the inclined surface 28E. In other words, the distance b from the point of effort to the fulcrum is longer than the distance from the fulcrum to the point of load. This allows the first brake piston 40 to slide in the axial direction with a small effort according to the principle of the leverage, leading to a small effort by the driver to operate the parking brake lever.

The second arm 28B of the first component 28 extends such that an end of the second arm is in a depression 60B formed in an edge of the cylinder block 60. Areturn spring 36 is interposed, as compressed, between a wall surface of the depression 60B of the cylinder block and the second arm 28B to act as an urging component to cause the first component 28 to return to its initial position upon the release of the parking brake. The first brake piston 40 and the return spring 36, observed from a radial direction, are thus positioned so as to overlap each other.

An action of the parking brake device 20 will now be described.

Upon the operation of the parking brake lever, not shown, by the driver, the brake wire 22 is pulled in an upper direction in the figure, in other words, in the "ON" direction of an arrow F. The first component 28 travels, while guided by the rollers 30A and 30B, in the upper direction as with the brake wire 22 accordingly. This causes the inclined surface 28E of the first component 28 to press the contact portion 32C of the second component 32 to the right in the figure (in a direction toward the first brake piston 40) so that the contact portion 32C rotates counterclockwise about the fulcrum 32A. Because of this rotation, the pressure portion 32B of the second component 32 causes the rear end portion 40A of the first brake piston 40 to travel in the "ON" direction of the arrow G in the figure. This brings the fixed friction plates 78A and the rotary friction plates 78B into forceful contact with each other successively as with the brake mechanism 14 in the braking operation described above, bringing about the braking action of the output shaft 70.

Upon the release of the parking brake lever by the driver, the restoring force of the return spring 52, interposed between the second shoulder portion 62B of the motor casing 62 and the second brake piston 50, causes the second brake piston 50 and the first brake piston 40 to travel back to the left in the figure, in other words, toward "OFF" of the arrow G, allowing each of the fixed friction plates 78A to return to its original position in the axial direction. This allows the rotary friction plates 78B to return to their original positions in the axial direction, undoing the contact between the fixed friction plates 78A and the rotary friction plates 78B and thereby losing the braking action. A force applied by the traveling first brake piston 40 through the contact portion 32C of the second component 32 and the restoring force of the return spring 36 cause the first component 28 to return to its initial position before the application of the parking brake. The roller 30A comes into contact with the bottom of the guide groove 28D in the first component 28 to prevent the first component 28 from traveling past the initial position. The traveling of the first component 28 to the initial position releases the brake wire 22, causing the brake wire 22 also to return to its initial position due to an urging component, not shown.

As described above, in the parking brake device according to this embodiment, the first component 28 is guided in a direction similar to the direction in which the brake wire 22 extends, and as a result, the direction in which the brake wire extends hardly varies with the parking brake actuated and released. This can prevent the brake wire from inclining to interfere with another component and from suffering fatigue due to repeated bending stress.

Additionally, the direction (marked with the arrow G in the figure) in which the first and the second brake pistons 40 and 50 travel in response to the parking brake operations is different from (perpendicular to, in this embodiment) the direction (marked with the arrow F in the figure) in which the first component 28 and the brake wire 22 travel. Such an arrangement allows a reduced length of the parking brake device 20 in the axial direction in comparison with a conventional arrangement. The positioning of the return spring 36 within the cylinder block 60 so that the return spring 36, observed from the radial direction, overlaps the first brake piston 40 also contributes to the further reduction of the length of the parking brake device 20 in the axial direction.

In this embodiment, the second component 32 is positioned so as to extend, not in the axial direction of the power transmission apparatus 100, but in a direction substantially orthogonal to the axis, and thus, the second component 32 can be designed to have a relatively long length, unlike the related art disclosed in the Japanese Patent Application Laid-Open No. 2003-226231. Furthermore, the distance between the fulcrum 32A and the pressure portion 32B is designed to be short, so that the travel distance of the pressure portion 32B in the axial direction, in other words, the travel lengths of the first and the second brake pistons 40 and 50 upon the actuation of the parking brake, can be designed to be relatively long. This is highly advantageous to a wet multiple-plate brake, such as the brake mechanism 14.

It is desirable that the wet multiple-plate brake is provided with long distances between friction plates in order to reduce a loss due to fluid resistance of a lubricant (brake fluid), which occurs while the brake is not in operation. This, however, requires a travel distance of the brake piston accordingly, leading to an increased pulling distance for the brake wire. Because of this, it may be difficult to secure a required braking force through the operation distance of the brake lever. This embodiment allows a relatively long travel distance of the brake piston (without increasing the length of the parking brake device in the axial direction) and thereby solves this problem.

Described above is an explanation based on an exemplary embodiment. The embodiment is intended to be illustrative only and it will be obvious to those skilled in the art that various modifications to constituting elements could be developed and that such modifications are also within the scope of the present invention.

While a power transmission apparatus with a wet multiple-plate brake has been described in the embodiments, the present invention is also applicable to a power transmission apparatus with a dry multiple-plate brake, in which a friction plate is not lubricated. The present invention is also applicable to a power transmission apparatus with another type of brake mechanism with an arrangement in which friction components are actuated by the traveling of a brake piston.

Priority is claimed to Japanese Patent Application No. 2013-035144, filed February 25, 2013, the entire content of which is incorporated herein by reference.

## Claims

1. A parking brake device (20), comprising:
a first component (28) connected to a transmitting component (22) that transmits a brake operation by a driver, the first component (28) being configured to travel, in response to the brake operation, in a direction in which the transmitting component (22) travels; and
a second component (32) having a pressure portion (32B) that presses a brake piston (40) in a direction different from the direction in which the transmitting component (22) travels, the brake piston (40) being configured to actuate friction components of a brake mechanism (14), wherein
the first component (28) has an inclined surface (28E), and
the second component (32) has a contact portion (32C) that comes into contact with the inclined surface (28E) and is configured to allow the pressure portion (32B) to turn about a fulcrum (32A) upon the traveling of the first component (28).

2. The parking brake device (20) according to claim 1, wherein, in the second component (32), the distance from the fulcrum (32A) to the contact portion (32C) is longer than the distance from the fulcrum (32A) to the pressure portion (32B).

3. The parking brake device (20) according to claim 1 or claim 2, further comprising a roller (30A, 30B) that guides the first component (28) in the direction in which the transmitting component (22) travels.

4. The parking brake device (20) according to one of claims 1 through 3, wherein, in the second component (32), the pressure portion (32B) is positioned between the fulcrum (32A) and the contact portion (32C).

5. The parking brake device (20) according to one of claims 1 through 4, wherein the contact portion (32C) is constituted by a roller that rolls on the inclined surface (28E).

6. The parking brake device (20) according to one of claims 1 through 5, further comprising an urging component (36) that urges the first component (28) back toward an initial position, the urging component (36) being located at a position overlapping the brake piston (40) observed from a radial direction.

7. The parking brake device (20) according to one of claims 1 through 6, wherein the brake mechanism (14) is a wet multiple-plate brake.

8. The parking brake device (20) according to one of claims 1 through 7, wherein
one of the pressure portion (32B) of the second component (32) and an end portion (40A) of the brake piston (40) has a convex surface, and the other has a concave surface.
